# EUROPÄISCHE PATENTANMELDUNG

(11) **EP 0 812 655 A2**
(43) Veröffentlichungstag der Anmeldung: **17.12.1997**
(21) Anmeldenummer: 97106596.6
(22) Anmeldetag: 21.04.1997
(51) Int. Cl.: B23Q 9/00, B23P 19/06

(54) **Vorrichtung zum Verschrauben von Hohlkammerprofilen**

(30) Priorität: 12.06.1996 DE 19623451
(71) Anmelder: RAPID MASCHINENBAU GmbH, 72131 Ofterdingen (DE)
(72) Erfinder: Sailer, Stefan, 72108 Rottenburg (DE)
(74) Vertreter: Weber, Otto Ernst, Dipl.-Phys.

(57) **Zusammenfassung**

Eine Schraubvorrichtung zum Verschrauben von Hohlkammerprofilen weist eine Spannzange und eine Schraubereinrichtung auf, die auf einem entlang einer Werkzeugführungsbahn verfahrbaren Schlitten angeordnet sind. Dadurch werden zu bearbeitende Hohlkammerprofile direkt an der Schraubposition von der Spannzange gespannt. Die Schraubvorrichtung hat eine geringe Baugröße und ermöglicht geringe Taktzeiten, da Leerfahrten des Schlittens vermieden werden.

## Beschreibung

Die Erfindung betrifft eine Schraubvorrichtung zum Verschrauben von Hohlkammerprofilen.

Hohlkammerprofile werden in vielen Bereichen eingesetzt, wie beispielsweise bei der Herstellung von Fensterrahmen. Eine übliche Konstruktionsart ist die Ausrüstung der Hohlkammerprofile, die beispielsweise aus Kunststoff bestehen können, mit Verstärkungsprofilen. Die Verstärkungsprofile bestehen zumeist aus einem wesentlich härteren und stabileren Material, sind allerdings weniger strukturiert als das Hohlkammerprofil. Die Hohlkammerprofile müssen mit den Verstärkungsprofilen in festgelegten Positionen mit hoher Genauigkeit miteinander verschraubt werden. Zu diesem Zweck sind Schraubvorrichtungen bekannt, die die Hohlkammerprofile mit den Verstärkungsprofilen verschrauben.

Bei den bekannten Schraubvorrichtungen haben sich zwei Versionen allgemein durchgesetzt:

In der ersten Version liegen die zu verschraubenden Profile fest auf einer Profilauflage. Die Schraubvorrichtung wird dann zu den Schraubpositionen am Profil bewegt. Die Profile sind während der Bearbeitung gegen Anschläge gespannt. Nach der Bearbeitung werden sie mit einem Transportschlitten, der eine Spannzange aufweist, transportiert. Schraubvorrichtungen dieser Bauart weisen jedoch einen aufwendigen Aufbau auf. Über die gesamte maximale Profillänge müssen Spanner vorgesehen werden, da an jeder Schraubposition eine genau definierte Einspannung vorausgesetzt werden muß. Weiterhin ist eine separate Abtransporteinheit notwendig, deren Bewegungsbereich sich mit dem Bewegungsbereich der Schraubvorrichtung überschneidet. Mitunter kann es zu einer Beeinträchtigung der Bearbeitungspositionen durch die feststehenden Spanner kommen. Ein wesentlicher Nachteil beim Betrieb ist durch die bei dieser Version notwendigen Leerbewegung des Transportschlittens gegeben. Der Zutransport der Profile kann erst erfolgen, nachdem der Transportschlitten in der Ausgangsstellung ist. Daraus ergeben sich lange Taktzeiten.

Bei der zweiten Version der Schraubvorrichtung ist die Schraubvorrichtung fest montiert, während die Profile bewegt werden. Eine Transportvorrichtung mit einer Spannzange transportiert das zu bearbeitende Profil von einer Schraubposition zur nächsten. Dabei muß das Profil nach jeder Bearbeitung an der neuen Schraubposition neu gespannt werden. Nach der letzten Bearbeitung legt die Transportvorrichtung das Profil in die Ablegeposition ab und fährt in die Ausgangsstellung zurück.

Ein wesentlicher Nachteil dieser Version ist der große Platzbedarf. Die Anlage ist mehr als doppelt so lang wie die maximal zu verarbeitende Profillänge. Vor und nach der Bearbeitung wird eine Bereitstellungs- und Ablageposition benötigt. Das Bewegen des Profils von der Bereitstellungsposition zur ersten Schraubposition mit noch nicht verschraubtem Verstärkungsprofil ist verfahrenstechnisch sehr ungünstig. Während der Bewegung kann durch Erschütterungen oder Trägheit des nicht eingespannten Verstärkungsprofiles eine Verschiebung der beiden Profile zueinander auftreten. Auch bei dieser Version sind relativ hohe Taktzeiten in Kauf zu nehmen. Durch den Transport der verschraubten Profile zur nächsten Bearbeitungsstation entsteht bei der Rückfahrt des Schlittens eine Leerbewegung.

Es liegt der Erfindung die **Aufgabe** zugrunde, eine Schraubvorrichtung zu schaffen, die bei einfachem Aufbau und geringem Platzbedarf besonders kurze Taktzeiten ermöglicht und zugleich eine sehr genaue Verschraubung der Profile gewährleistet.

Für eine gattungsmäßige Schraubvorrichtung wird die Aufgabe durch die Merkmale des kennzeichnenden Teiles des Anspruches 1 gelöst.

In den abhängigen Ansprüchen 2 bis 6 werden vorteilhafte Ausführungsformen der Erfindung dargestellt.

Da die Schraubvorrichtung zusammen mit der Spannzange auf dem Schlitten angebracht ist, werden wesentlich weniger Bauteile benötigt. Die Abmessungen der Schraubvorrichtung sind gering und die Schraubvorrichtung weist einen einfacheren Aufbau auf. Die Schraubvorrichtung ermöglicht eine äußerst exakte und einfach zu bewerkstelligende Verschraubung von Hohlkammerprofilen, da die Profile direkt an der Schraubposition gespannt werden können.

Die Taktzeit ist sehr gering. Da die Bearbeitungsrichtung auf den Nullschieber zu verläuft, werden Leerfahrten des Schlittens vermieden. Die bearbeiteten Teilen werden an dem dem Nullschieber zugewandten Ende zum Abtransport von der Spannzange gespannt. Nachdem die Teile der nächsten Bearbeitungsstation zugeführt wurden, steht der Schlitten wieder direkt neben der ersten Schraubposition des nächsten zu bearbeitenden Hohlkammerprofils.

Weiterhin ist eine exakte Ausrichtung der zu bearbeitenden Teile dadurch gewährleistet, daß sich der Schlitten zwischen den Schraubpositionen immer nur in Richtung auf den Anschlag, bzw. den Nullschieber, entlang der zu bearbeitenden Teile bewegt. Ein Verrutschen durch versehentliches Mitnehmen durch die sich bewegenden Teile der Schraubvorrichtung wird vermieden.

Gegenüber den aus dem Stand der Technik bekannten Versionen einer Schraubvorrichtung weist die erfindungsgemäße Schraubvorrichtung eine geringe Baugröße auf. Die Bereitsstellungsposition ist gleichzeitig die Bearbeitungs- und Ablageposition. Die gesamte Station ist dadurch nur so lang, wie das längste zu bearbeitende Profil.

Die Ausrichtung der zu bearbeitenden Profile ist ebenfalls äußerst genau, da die Profile frei auf einer Auflagefläche liegen und nur durch die mit dem Schlitten bewegbare Spannzange fixiert werden. Die Beeinträchtigung durch ortsfeste Spannvorrichtungen wird vermieden.

Ebenfalls ist es nicht notwendig, daß, wie bei der Version 1 einer Schraubvorrichtung nach dem Stand der Technik, profilabhängige, individuell ausgeführte Spannvorrichtungen vorgesehen sein müssen. Die Bauteile können für jede Maschine und jedes Profil einheitlich gefertigt werden. Durch diese Serienfertigung wird die Einheit kostengünstiger.

Die Erfindung wird nachfolgend anhand der Figuren beschrieben. Es zeigen
- Fig. 1: eine Seitenansicht einer erfindungsgemäßen Schraubvorrichtung;
- Fig. 2: eine Draufsicht auf eine erfindungsgemäße Schraubvorrichtung.

Aus einem Magazin 1 werden einer Spannzange 2 die zu bearbeitenden Profile 3 zugeführt. Die Spannzange 2 ist auf einem Schlitten 4 befestigt, der mit einem Servomotor 5 entlang einer Werkzeugführungsbahn 6 bewegbar ist. Auf dem Schlitten 4 ist weiterhin eine Schraubereinrichtung 7 angeordnet. Das Profil wird zur Bearbeitung mit einem Längsende an einem als Nullschieber 8 ausgeführten Anschlag ausgerichtet. Die Schraubereinrichtung 7 weist einen Schrauberbit 9 auf, der die Schrauben in das Profil 3 einschraubt. Zur Bearbeitung wird das Profil 3 auf einer Profilführungsbahn 10 angeordnet, zu dem es in Querrichtung über den Zuführbereich 11 transportiert wurde.

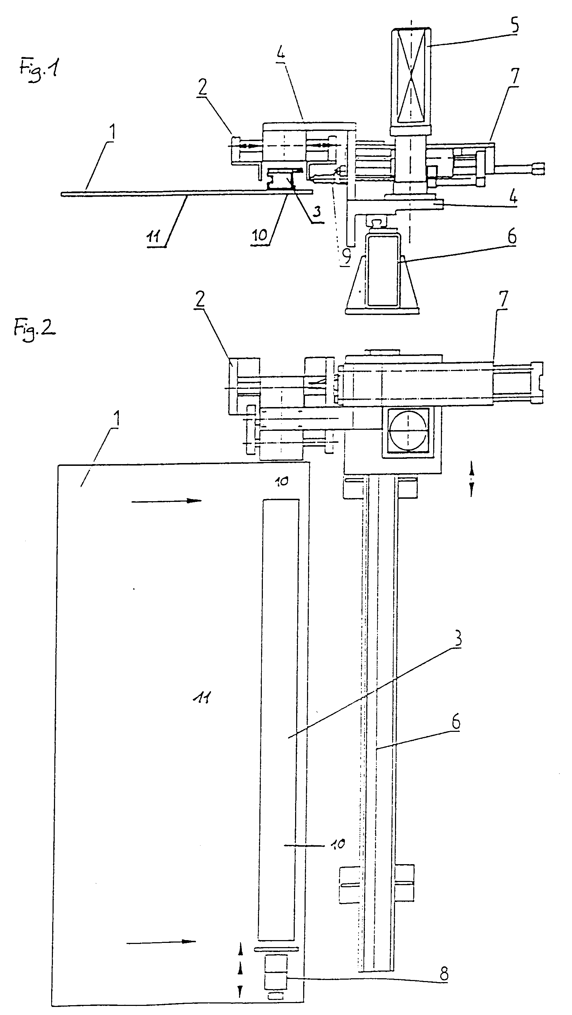

Der Nullschieber 8 schiebt das Profil in seiner Längsrichtung in eine Nullposition. Danach fährt der Schlitten 4 auf der Werkzeugführungsbahn 6 entlang der Pfeilrichtung nach unten aus Figur 2 entlang dem zu bearbeitenden Profil 3 bis zur ersten Schraubposition. Dort spannt die Spannzange 2 das Profil 3 und die Schraubereinrichtung 7 schraubt mittels des Schrauberbits 9 die zu verschraubenden Profile 3 zusammen. Vorzugsweise werden Schrauben, die eine Bohrspitze aufweisen und sich selbst eine Gewindebohrung erzeugen, verwendet.

Nachdem alle Schraubvorgänge an der ersten Schraubposition durchgeführt wurden, löst sich die Spannzang 2 vom Profil 3 und der Schlitten 4 fährt weiter in Pfeilrichtung nach unten aus Figur 2 entlang dem Profil 3 zur nächsten Schraubposition. Der gesamte Schraubvorgang wiederholt sich, bis die in Figur 2 unterste Schraubposition bearbeitet wurde.

Danach schiebt der Nullschieber 8 bei gelöster Spannzange 2 das Profil 3 in eine zweite Nullposition in Pfeilrichtung aus Figur 2 nach oben. Die Spannzange 2 ergreift nun das Profil 3 nahe dem unteren Ende und verschiebt das Profil 3 nach oben zur nächsten Bearbeitungsstation (nicht dargestellt). Der Schlitten 4 befindet sich nach diesem Arbeitsschritt ungefähr in der in Figur 2 dargestellten Position. Er ist also ungefähr in Ausgangsstellung für die Bearbeitung des nächsten Profils 3. Leerfahrten des Schlittens 4 werden vermieden.

Der Schrauberbit ist in mindestens zwei Raumrichtungen schwenkbar angeordnet, um alle Schraubpositionen und -richtungen am Profil 3 erreichen zu können.

## Patentansprüche

1. Vorrichtung zum Verschrauben von Hohlkammerprofilen (3), die auf einer Profilführungsbahn (10) jeweils in einer definierten Lage fixiert sind,
dadurch **gekennzeichnet**,
daß eine Schraubereinrichtung (7) zusammen mit einer Spannzange (2) auf einem Schlitten (4) angebracht ist, und
daß der Schlitten (4) entlang einer Werkzeugführungsbahn (6) verfahrbar ist, welche parallel zu der Profilführungsbahn (10) verläuft.

2. Vorrichtung nach Anspruch 2,
dadurch **gekennzeichnet**,
daß die Profilführungsbahn (10) an einem Längsende einen Anschlag für ein einliegendes Hohlkammerprofil (3) aufweist.

3. Vorrichtung nach Anspruch 3,
dadurch **gekennzeichnet**,
daß der Anschlag als Nullschieber (8) zum Verschieben der in der Profilführungsbahn (10) liegenden Hohlkammerprofile (3) ausgeführt ist.

4. Vorrichtung nach einem der Ansprüche 2 bis 4,
dadurch **gekennzeichnet**,
daß die Profilführungsbahn (10) einen Zuführbereich (11) für die Zuführung von Hohlkammerprofilen (3) in deren Querrichtung aufweist.

5. Vorrichtung nach einem der vorhergehenden Ansprüche,
dadurch **gekennzeichnet**,
daß die Schraubereinrichtung (7) einen Schrauberbit (9) aufweist.

6. Vorrichtung nach Anspruch 6,
dadurch **gekennzeichnet**,
daß der Schrauberbit (9) in mindestens zwei Raumrichtungen schwenkbar ist.
